# EUROPÄISCHE PATENTSCHRIFT

(11) **EP 1 654 137 B1**
(45) Veröffentlichungstag und Bekanntmachung des Hinweises auf die Patenterteilung: **15.10.2008**
(21) Anmeldenummer: 04762367.3
(22) Anmeldetag: 10.07.2004
(51) Int. Cl.: B60K 26/02

(54) **PEDAL-VORRICHTUNG FÜR KRAFTFAHRZEUGE**
PEDAL MECHANISM FOR MOTOR VEHICLES
DISPOSITIF POUR PEDALE DE VEHICULE AUTOMOBILE

(30) Priorität: 04.08.2003 DE 10335598
(43) Veröffentlichungstag der Anmeldung: 10.05.2006
(73) Patentinhaber: ROBERT BOSCH GMBH, 70442 Stuttgart (DE)
(72) Erfinder: KLOTZBUECHER, Thomas, 70635 Rudersberg (DE); BAUER, Bernhard, 71554 Weissach (DE); WEISS, Sebastian, 70736 Fellbach (DE)
(86) Internationale Anmeldenummer: PCT/DE2004/001507
(87) Internationale Veröffentlichungsnummer: WO 2005/014325

(56) Entgegenhaltungen:
- EP-A- 1 233 320
- DE-A- 10 021 532
- US-A- 3 926 275
- US-A- 4 356 471
- US-A- 4 615 409

## Beschreibung

### Stand der Technik

Die Erfindung betrifft eine Pedal-Vorrichtung für Kraftfahrzeuge, beinhaltend eine Einrichtung zur sprunghaften Änderung der Betätigungskraft ab einem vorbestimmten Betätigungsweg des Pedals, insbesondere Kick-Down-Einrichtung, beinhaltend wenigstens ein Federelement, gemäß dem Oberbegriff von Anspruch 1. Eine solche Kick-Down-Einrichtung ist beispielsweise aus der DE 100 10 432 A1 bekannt und wird nach einem vorbestimmten Schwenkweg des Gaspedals wirksam. Sie beinhaltet eine U-förmige Blattfeder, deren Schenkel im Kick-Down-Fall zwei Kugeln überdrücken. Die bekannte Konstruktion besteht aus einer Reihe von Bauteilen und erfordert daher einen gewissen Fertigungsaufwand.

Im weiteren betrifft die Erfindung eine Pedal-Vorrichtung für Kraftfahrzeuge, mit einem vom Fahrer betätigbaren Pedal, welches durch eine gegen die Betätigungskraft wirkende und durch wenigstens ein elastisch verformbares Bauteil erzeugte Rückstellkraft belastet ist, und mit einem Stellungsgeber, welcher ein elektrisches, von der Pedalstellung abhängiges Stellsignal erzeugt, beinhaltend wenigstens einen im Verformungsbereich des elastisch verformbaren Bauteils angeordneten Verformungs- oder Kraftsensor, welcher ein Verformungs- oder Kraftsignal liefert, in dessen Abhängigkeit das Stellsignal erzeugt wird. Eine solche Vorrichtung ist aus der US 4,970,486 bekannt und umfasst ein starres Pedal, welches durch eine im Querschnitt U-förmige Blattfeder auf einer Konsole schwenkbar gelagert ist, wobei der elektrische Verformungs- oder Kraftsensor, nämlich ein oder mehrere Dehnmeßstreifen an der Blattfeder angebracht sind. Für eine genaue Messung der Verformung oder der Kraft durch elektrischen Verformungs- oder Kraftsenoren sind jedoch große Verformungen ungünstig. Andererseits soll das elastisch verformbare Bauteil einen ausreichend großen Stellweg zur Verfügung stellen, um eine feinstufige Verstellung des Pedals zu ermöglichen.

Schließlich betrifft die Erfindung eine Pedal-Vorrichtung für Kraftfahrzeuge, beinhaltend einen Stellungsgeber für das Pedal, welcher ein elektrisches, von der Fahrpedalstellung abhängiges Stellsignal erzeugt, beinhaltend eine bei Pedalbetätigung elastisch verformbare Federeinrichtung, in deren Verformungsbereich ein Verformungs- oder Kraftsensor angeordnet ist, welcher ein Verformungs- oder Kraftsignal liefert, in dessen Abhängigkeit das Stellsignal erzeugt wird. Eine solche Vorrichtung ist ebenfalls aus der US 4,970,486 bekannt. Falls man die bekannte Fahrpedal-Vorrichtung durch eine Kick-Down-Einrichtung ergänzen möchte, müßte ein separater Kick-Down-Schalter vorgesehen werden, wie beispielsweise in der DE 195 31 735 C1 beschrieben.

Das Dokument EP-A-1 233 320 offenbart eine Pedalvorrichtung nach dem Oberbegriff von Anspruch 1, wo die Berührung eines Anschlages von einem Sensor erfassbar ist.

### Vorteile der Erfindung

Indem das Federelement der Pedal-Vorrichtung gemäß Anspruch 1 einen in einer Richtung vorspringenden, aufgrund einer durch eine Betätigung des Pedals hervorgerufenen Verformung ab einem bestimmten Verformungsgrad in eine in Bezug zur Richtung des Vorspringens in Gegenrichtung umschnappbaren Abschnitt aufweist, ist eine äußerst einfache Konstruktion gegeben, weil außer dem Federelement selbst keine weiteren Bauteile benötigt werden, um den Kraftsprung zu erzeugen. Folglich ist die Pedal-Vorrichtung kostengünstig herstellbar.

Erfindungsgemäss ist das Umschnappen des Federelements von einem ein Umschnappsignal liefernden Sensor erfaßbar, wobei das Umschnappsignal beispielsweise ein Kick-Down-Signal für ein automatisches Getriebe des Kraftfahrzeugs oder ein Signal sein kann, welches eine durch eine fahrzeuginterne oder eine fahrzeugexterne Anforderung hervorgerufenes Geschwindigkeitsbegrenzungssignal aufhebt oder überschreibt. Eine solche fahrzeugexterne Anforderung kann eine beispielsweise durch ein Telemetriesystem hervorgerufene Beschränkung der Fahrgeschwindigkeit des Kraftfahrzeugs auf eine in dem jeweils befahrenen Straßenabschnitt erlaubte Höchstgeschwindigkeit sein. Dabei kann die Pedalstellung, welche der erlaubten Höchstgeschwindigkeit entspricht, durch die Stellung kurz vor Erreichen des Kraftsprungs gebildet werden. Mittels einer Betätigung des Pedals über den spürbaren Kraftsprung hinaus kann dann die von außen aufgezwungene Geschwindigkeitsbeschränkung aufgehoben werden, beispielsweise um einen Überhohlvorgang sicher abschließen zu können.

Indem bei der Pedal-Vorrichtung gemäß Anspruch 2 das elastisch verformbare Bauteil wenigstens zwei funktional in Reihe geschaltete Federelemente beinhaltet, wobei eines der Federelemente bei einer gegebenen Belastung einen in Belastungsrichtung kleineren Verformungsweg aufweist als das andere Federelement und wobei dem einen Federelement der Verformungs- oder Kraftsensor zugeordnet ist, gewährleistet sie zum einen die für die Meßgenauigkeit elektrischer Verformungs- oder Kraftsensoren günstigen kleineren Verformungen an dem einen Federelement. Zum andern gewährleistet das andere Federelement mit größerem Verformungsweg einen ausreichend großen Stellweg, um eine feinstufige Verstellung des Pedals zu ermöglichen. Da beide Federelemente funktional in Reihe geschaltet sind, tragen sie auch beide zur Erzeugung der Rückstellkraft bei, so dass beide Federelemente klein bauen können.

Besonders bevorzugt wird das eine, den Verformungs- oder Kraftsenor tragende Federelement durch wenigstens eine vergleichsweise steife und kurz bauende Tellerfeder und das andere Federelement durch wenigstens eine vergleichsweise lange und weichere Schraubenfeder gebildet. Der Verformungs- oder Kraftsensor kann dann durch einen oder mehrere an der Tellerfeder angebrachte Dehnmeßstreifen oder durch nach einem anderen Meßprinzip arbeitende Sensoren gebildet werden.

Ein Vorteil der Pedal-Vorrichtung liegt in dem äußerst vereinfachten und kostengünstigen Aufbau gegenüber dem jeweiligen Stand der Technik, zu welchem auch die bevorzugte Verwendung einer einfachen Tellerfeder als Federelement beiträgt.

Durch die in den Unteransprüchen aufgeführten Maßnahmen sind vorteilhafte Weiterbildungen und Verbesserungen der in den unabhängigen Patentansprüchen angegebenen Erfindung möglich.

Besonders bevorzugt ist ein von dem Pedal betätigbarer Stößel gegen die Tellerfeder in Umschnapprichtung anschlagbar ausgebildet, wobei ein Ende des Stößels erst nach Zurücklegen eines vorgegebenen Betätigungsweges an der Tellerfeder anschlägt. Somit wird das Umschnappen der Tellerfeder und folglich das Auslösen des Umschnappsignals erst nach einem bestimmten Schwenkweg des Pedals ausgelöst, wie es typischerweise bei einer Kick-Down-Einrichtung der Fall ist. Dabei kann ein randseitiger Auflageabschnitt der Tellerfeder gegen einen Boden eines Gehäuses und der vorspringende Abschnitt der Tellerfeder gegen eine endseitige Öffnung einer Durchgangsbohrung eines Führungselements abgestützt sein, in welcher der Stößel linear verschiebbar geführt ist.

Im Falle einer nach Anspruch 2 ausgestalteten Pedaleinrichtung kann ein Ende der Schraubenfeder gegen das Führungselement und das andere Ende gegen den Stößel abgestützt sein, um die funktionale Reihenschaltung von Tellerfeder und Schraubenfeder zu realisieren.

Bei der Pedal-Vorrichtung kann ein vom Fahrpedal betätigbares Betätigungselement mit einem kegelförmig sich zum Ende hin verjüngenden Abschnitt in einen komplementär kegelig geformte Ringöffnung eines radial elastisch aufweitbaren Gleitrings eingreifen, welcher in einem Gehäuse verschieblich geführt und durch die Reihenschaltung aus Tellerfeder und Schraubenfeder axial belastet ist. Bei Betätigung des Betätigungselements erhöht sich die axiale Kraft auf den unter Federlast stehenden Gleitring, welcher sich daraufhin derart radial elastisch aufweitet, dass er einerseits noch innerhalb des Gehäuses gleiten kann, um den an ihm endseitig anliegenden Stößel zu treiben, und um andererseits eine Reibkraft zwischen seiner radial äußeren Umfangsfläche und dem Gehäuse zu erzeugen, welche eine Krafthysterese hervorruft, die sich vorteilhaft für das Fahrgefühl herausgestellt hat.

Gemäß einer weiteren Maßnahme beinhaltet der das Umschnappsignal liefernde Sensor eine Leiterplatte, welche auf der vom Stößel abgewandten Seite der Tellerfeder derart beabstandet angeordnet ist, dass mittels eines durch den Stößel hervorgerufenen Umschnappens die Tellerfeder die Leiterplatte kontaktiert und dadurch das Umschnappsignal auslöst. Die Leiterplatte ist vorzugsweise an dem Boden des Gehäuses angeordnet, in welchem auch der Gleitring gelagert ist.

Vorzugsweise sind zumindest die Schraubenfeder, die Tellerfeder, der Stößel, der Gleitring, das Führungselement und der endseitige kegelförmige Abschnitt des Betätigungselements innerhalb des Gehäuses koaxial angeordnet. Hierdurch ergibt sich ein komplett vorfertigbares, kompakt bauendes Modul.

### Zeichnungen

Ein Ausführungsbeispiel der Erfindung ist in der Zeichnung dargestellt und in der nachfolgenden Beschreibung näher erläutert. In der Zeichnung zeigt
- Fig.1: eine perspektivische Darstellung eines Teils einer Pedal-Vorrichtung gemäß einer bevorzugten Ausführungsform;
- Fig.2: eine Querschnittsdarstellung der Pedal-Vorrichtung von Fig.1.

### Beschreibung des Ausführungsbeispiels

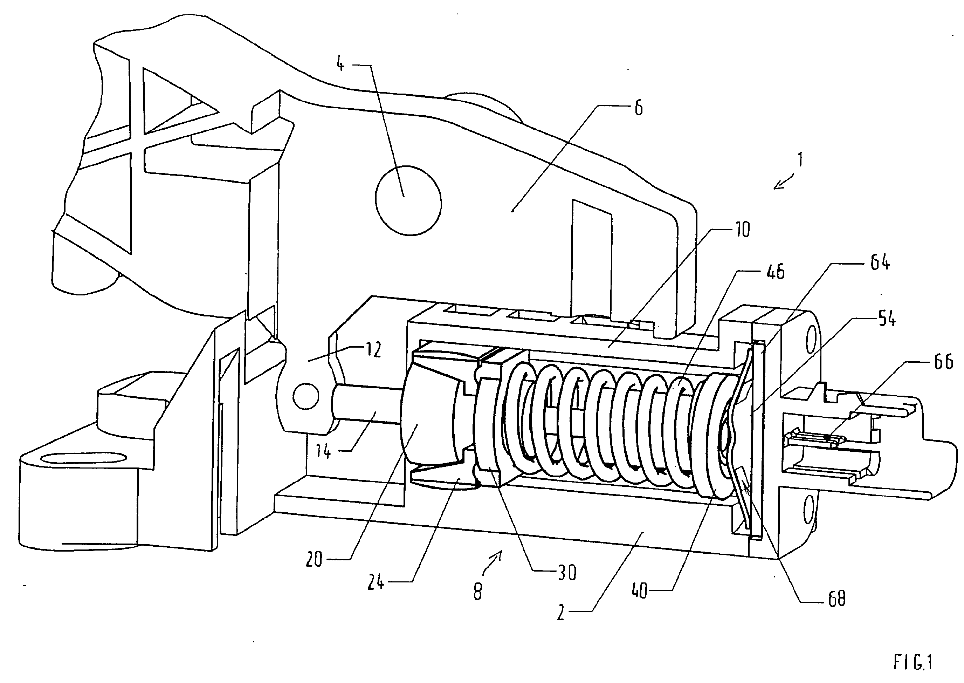

Die in Fig.1 gezeigte Pedal-Vorrichtung 1 eines Kraftfahrzeugs beinhaltet ein vom Fahrer betätigbares, an einem Lagerbock 2 um eine Schwenkachse 4 schwenkbar gelagertes Pedal 6, welches durch eine gegen die Betätigungskraft wirkende Rückstellkraft belastbar ist. Die Rückstellkraft wird durch eine Federeinrichtung 8 erzeugt, welche im wesentlichen in einem am Lagerbock 2 festgelegten Gehäuse 10 untergebracht ist. Bei dem Pedal handelt es sich im vorliegenden Fall um ein stehendes oder hängendes Gaspedal 6. Die Anwendung der Erfindung ist allerdings nicht auf ein Gaspedal 6 eines Kraftfahrzeugs beschränkt. Vielmehr kann sie auch in einem Brems- oder Kupplungspedal umgesetzt werden.

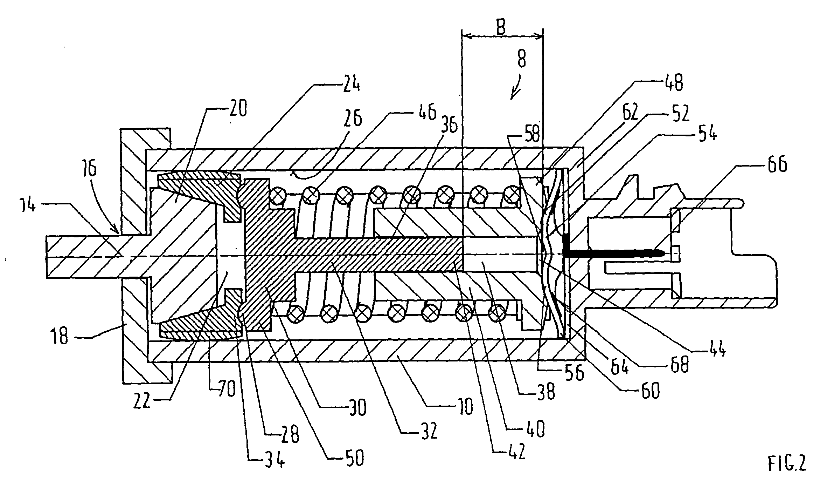

Im einzelnen beinhaltet die Federeinrichtung 8 ein vom Gaspedal 6 über eine Hebelanlenkung 12 in Bezug zum Gehäuse 10 axial betätigbares Betätigungselement 14, welches über eine Durchgangsöffnung 16 in einem kopfseitigen Deckel 18 des Gehäuses 10 in dieses hineinragt. Das Betätigungselement 14 hat einen sich zum Ende hin kegelförmig verjüngenden pilzförmigen Abschnitt 20, welcher in eine komplementär kegelig geformte Ringöffnung 22 eines radial elastisch aufweitbaren Gleitrings 24 eingreift, welcher entlang einer glatten radial inneren Umfangsfläche 26 einer Mantelwand des Gehäuses 10 mit geringem Radialspiel axial verschieblich geführt ist. Im weiteren greift ein stirnseitiger, umlaufender Zentrierring 28 eines pilzförmigen Kopfes 30 eines Stößels 32 in eine diesem zugewandte umlaufende Ringnut 34 des Gleitrings 24 zur Übertragung von Axialkräften unter gleichzeitiger Zentrierung des Stößels 32 ein. Eine vom Gleitring 24 weg weisende Stange 36 des Stößels 32 ist in einer zentralen Durchgangsbohrung 38 eines Führungselements 40 geführt, wobei in der in Fig.1 und Fig.2 gezeigten Leerlaufstellung des Gaspedals 6 das vom pilzförmigen Kopf 30 des Stößels 32 weg weisende Ende 42 der Stange 36 nicht bis an eine endseitige Öffnung 44 der Durchgangsbohrung 38 heranreicht. Ein Ende wenigstens einer Schraubenfeder 46 ist gegen einen Ringbund 48 des Führungselements 40 und das andere Ende der Schraubenfeder 46 gegen einen Ringbund 50 am Kopf 30 des Stößels 32 abgestützt. Anstatt einer einzigen Schraubenfeder 46 können auch mehrere ineinander gesteckte und daher parallel geschaltete Schraubenfedern verwendet werden. Aufgrund der geschilderten Anordnung wirkt die Schraubenfeder 46 mit ihrer Federkraft einem tieferen Eindringen der Stange 36 des Stößels 32 in die Durchgangsbohrung 38 entgegen.

Die Durchgangsbohrung 38 des Führungselements 40 mündet mittels der endseitigen Öffnung 44 in eine Stirnfläche mit einer konkaven Anlagefläche 52, in welche wenigstens eine Tellerfeder 54 mit ihrem vorspringenden Abschnitt 56 eingreift. Der vorspringende Abschnitt 56 der Tellerfeder 54 hat wiederum in Bezug zum Stößel 32 eine konkave Ausnehmung 58. Weiterhin hat die Tellerfeder 54 einen randseitigen Auflageabschnitt 60, mit welchem sie sich an einer auf dem Boden 62 des Gehäuses aufgesetzten Leiterplatte 64 abstützt. Die Tellerfeder 54 ist mit ihrem vorspringenden Abschnitt 56 umschnappbar, d.h. bei einem gewissen, durch den aus der Öffnung 44 hervortretenden Stange 36 des Stößels 32 hervorgerufenen Verformungsgrad schnappt der ursprünglich in Richtung des Stößels 32 vorspringende Abschnitt 56 in die Gegenrichtung, d.h. zur Leiterplatte 64 hin um, um diese zu kontaktieren. Danach schnappt die Tellerfeder 54 selbsttätig wieder in ihre in Fig.1 und Fig.2 gezeigte Ausgangsstellung zurück. Indem die Stange 36 des Stößels 32 erst nach Zurücklegen eines vorgegebenen Betätigungsweges B an der Tellerfeder 54 anschlägt, wird diese erst nach Zurücklegen dieses frei festlegbaren Wegs B zum Umschnappen veranlaßt.

Von der Leiterplatte 64 ragen elektrische Steckkontakte 66 durch den Boden 62 des Gehäuses 10 hindurch nach draußen, wobei diese Kontakte 66 für einen nicht gezeigten Stecker einer Signalleitung vorgesehen sind, welche mit einem elektronischen Steuergerät einer Brennkraftmaschine und/oder mit einem elektronischen Steuergerät eines automatischen Getriebes verbunden ist. Über den Ringbund 48 des Führungselements 40 sind die Schraubenfeder 46 und die Tellerfeder 54 funktional oder mechanisch in Reihe geschaltet, d.h. dass beide Federn 46, 54 komprimiert werden, falls das Gaspedal 6 betätigt wird und das Betätigungselement den Stößel 32 weiter nach rechts verschiebt. Die federspezifischen Parameter, beispielsweise die Federraten der Tellerfeder 54 und der Schraubenfeder 46 sind derart gewählt, dass die Tellerfeder 54 bei einer gegebenen axialen Belastung einen kleineren axialen Verformungsweg aufweist als die Schraubenfeder 46.

Die Federeinrichtung 8 beinhaltet außerdem einen Stellungsgeber, welcher ein elektrisches, von der Gaspedalstellung abhängiges Stellsignal erzeugt, beinhaltend einen in einem Verformungsbereich der Tellerfeder 54 angeordneten Verformungs- oder Kraftsensor 68, welcher ein Verformungs- oder Kraftsignal liefert, in dessen Abhängigkeit das Stellsignal für die Brennkraftmaschine des Kraftfahrzeugs erzeugt wird. Der Verformungs- oder Kraftsensor 68 wird vorzugsweise durch einen oder mehrere an der vom Stößel weg weisenden Seite des vorspringenden Abschnitts 56 der Tellerfeder 54 angebrachte Dehnmeßstreifen gebildet, mit denen die Verformung der Tellerfeder 54 meßbar ist. Statt dessen können auch andere Sensoren verwendet werden, mit welchen die Verformung der Tellerfeder 54 bzw. die auf sie wirkende Kraft gemessen werden kann, beispielsweise piezo-elektrische Sensoren. Die Dehnmeßstreifen 68 sind mit einer aus Maßstabsgründen nicht gezeigte Auswerteinheit verbunden, welche Signale an das Steuergerät der Brennkraftmaschine senden kann.

Das Betätigungselement 14, der Gleitring 24, der Stößel 32, die Schraubenfeder 46, das Führungselement 40, die Tellerfeder 54 und die Leiterplatte 64 sind beispielsweise koaxial in dem Gehäuse 10 untergebracht. Das Gehäuse 10 ist vorzugsweise geschlossen, wobei eine Montage- bzw. Zugangsmöglichkeit durch den abnehmbaren Deckel 18 gegeben ist. Vor diesem Hintergrund ist die Funktionsweise der Pedal-Vorrichtung 1 wie folgt :

In der in Fig.1 und Fig.2 gezeigten Leerlaufposition des Gaspedals 6 schlägt der pilzförmige Abschnitt 20 des Betätigungselements 14 von innen am Deckel 18 des Gehäuses 10 an und die der Tellerfeder 54 zugewandte und in der Durchgangsbohrung 38 des Führungselements 40 geführte Stange 36 des Stößels 32 ist von der Tellerfeder 54 beabstandet. Das Gaspedal 6 ist in der Leerlaufposition kraftfrei, da weder die Schraubenfeder 46 noch die Tellerfeder 54 eine Kraft auf das Betätigungselement 14 ausüben.

Durch die genannten Maßnahmen ist das Gaspedal 6 vom Verformungs- oder Kraftsensor 68 an der Tellerfeder 54 entkoppelt, insbesondere wirkt in der Leerlaufposition keine Rückstellkraft auf das Gaspedal 6. Daraus folgt in vorteilhafter Weise eine konstante Leerlaufspannung der Verformungssensorschaltung. Außerdem verformt sich das Gaspedal 6 nicht durch die Wirkung der Federelemente 46, 54 und die Pedalwege und der Auftrittspunkt des Gaspedals 6 ändern sich auch über einen längeren Zeitraum nicht.

Bei Niedertreten des Gaspedals 6 um einen Schwenkweg, welcher etwa einer Teillast der Brennkraftmaschine entspricht, wird das Betätigungselement 14 gemäß der Darstellung von Fig.1 und Fig.2 nach rechts gegen die Wirkung der über den Ringbund 48 des Führungselements 40 und den Stößel 32 ihre Federkräfte übertragenden Tellerfeder 54 und Schraubenfeder 46 verschoben. Unter Wirkung der axialen Betätigungskraft bzw. der axialen Federreaktionskräfte wird der kegelförmig verjüngte, pilzförmige Abschnitt 20 des Betätigungselements 14 in die komplementär kegelig geformte Ringöffnung 22 des Gleitrings 24 eingedrückt, welcher sich daraufhin radial um ein geringes Stück ausweitet, was zur Ausbildung von Reibkräften zwischen einer radial äußeren, vorzugsweise ballig geformten Umfangsfläche 70 des Gleitrings und der radial inneren Umfangsfläche 26 des Gehäuses 10 führt. Diese Reibkräfte sind ausdrücklich erwünscht, um eine Krafthysterese hervorzurufen, die sich vorteilhaft für das Fahrgefühl herausgestellt hat. Die Verschiebung des Betätigungselements 14 nach rechts verursacht eine ebensolche Verschiebung des Stößels 32, dessen Stange 36 daraufhin etwas weiter in die Durchgangsbohrung 38 des Führungselements 40 eindringt, wodurch sich sowohl die axiale Länge der Schraubenfeder 46 als auch die der Tellerfeder 54 verkürzt. Durch Verformung der Tellerfeder 54 werden zugleich die an ihr angebrachten Dehnmeßstreifen 68 verformt, woraufhin die Auswerteeinheit ein Stellsignal an das Steuergerät sendet, welches der momentanen Stellung des Gaspedals 6 entspricht, um die Leistung der Brennkraftmaschine an die Beschleunigungsanforderung anzupassen. Die komprimierte Tellerfeder 54 und die komprimierte Schraubenfeder 46 sorgen zugleich für die Rückstellkraft am Gaspedal 6, welche der Betätigungskraft entgegenwirkt.

Bei einer weiteren Betätigung des Gaspedals 6, bei welcher der Stößel 32 durch das Betätigungselement 14 soweit nach rechts verschoben wird, dass das Ende 42 der Stange 36 aus der endseitigen Öffnung 44 des Führungselements 40 heraustritt und durch Anlage an der am Boden 62 des Gehäuses 10 abgestützen Tellerfeder 54 diese zum Umschnappen bringt, kontaktiert die Tellerfeder 54 vor ihrem selbsttätigen Zurückschnappen die Leiterplatte 64, woraufhin ein elektrisches Signal erzeugt und an das Steuergerät der Brennkraftmaschine und/oder an das Steuergerät des automatischen Getriebes weitergeleitet wird. Dieses Signal kann ein Kick-Down-Signal für das automatische Getriebe des Kraftfahrzeugs oder ein Signal sein, welches eine durch eine fahrzeuginterne oder eine fahrzeugexterne Anforderung hervorgerufenes Geschwindigkeitsbegrenzungssignal aufhebt oder überschreibt. Eine solche fahrzeugexterne Anforderung kann eine beispielsweise durch ein Telemetriesystem hervorgerufene Beschränkung der Fahrgeschwindigkeit des Kraftfahrzeugs auf eine in dem jeweils befahrenen Straßenabschnitt erlaubte Höchstgeschwindigkeit sein. Dabei kann die Gaspedalstellung, welche der erlaubten Höchstgeschwindigkeit entspricht, durch die Stellung kurz vor Erreichen des Kraftsprungs gebildet werden. Mittels einer Betätigung des Gaspedals 6 über die spürbare, kurz vor dem Umschnappen der Tellerfeder 54 stattfindende, sprunghafte Krafterhöhung hinaus kann dann die von außen aufgezwungene Geschwindigkeitsbeschränkung aufgehoben werden, beispielsweise um einen Überhohlvorgang sicher abschließen zu können. Die sprunghafte Rückstellkrafterhöhung in Bezug zu dem gesamten vorangehenden Betätigungsweg des Gaspedals 6 ist dabei darauf zurückzuführen, dass erst nach einem bestimmten, allein durch die Schraubenfeder 46 beeinflußten Betätigungsweg der Stößel 32 die Tellerfeder 54 kontaktiert, die Tellerfeder 54 nur einen relativ kurzen Federweg bis zum Umschnappen zur Verfügung stellt und zum Umschnappen eine relativ hohe Verformung der Tellerfeder 54 notwendig ist. Nach dem Umschnappen der Tellerfeder 54 sinkt die auf das Gaspedal 6 wirkende Rückstellkraft wiederum sprunghaft, weil die Tellerfeder 54 vorübergehend keine Rückstellkraft mehr aufbauen kann. Die sprunghafte Änderung der Rückstellkraft signalisiert dem Fahrer, dass eine Grenze überschritten wurde. Das anschließende selbsttätige Zurückschnappen der Tellerfeder 54 stellt dann wieder die oben beschriebene Ausgangslage her.

## Patentansprüche

1. Pedal-Vorrichtung (1) für Kraftfahrzeuge mit, einem von einem Fahrer betätigbaren Pedal (6), mit einer Einrichtung zur sprunghaften Änderung der Betätigungskraft ab einem vorbestimmten Betätigungsweg des Pedals (6), insbesondere Kick-Down-Einrichtung, beinhaltend wenigstens ein Federelement (54), das einen in einer Richtung vorspringenden, aufgrund einer durch eine Betätigung des Pedals (6) hervorgerufenen Verformung ab einem bestimmten Verformungsgrad in eine in Bezug zur Richtung des vorspringend in Gegenrichtung umschnappbaren Abschnitt (56) aufweist, **dadurch gekennzeichnet, dass** das Umschnappen des vorspringenden Abschnitts (56) des Federelements (54) von einem ein Umschnappsignal liefernden Sensor (64) erfassbar ist.

2. Pedal-Vorrichtung (1) für Kraftfahrzeuge nach Anspruch 1, **dadurch** gekenntzeichnet, dass das Pedal (6) durch eine gegen die Betätigungskraft wirkende und durch wenigstens ein elastisch verformbares Bauteil (46, 54) erzeugte Rückstellkraft belastet ist, und mit einem Stellungsgeber, welcher ein elektrisches, von der Pedalstellung abhängiges Stellsignal erzeugt, beinhaltend wenigstens einen im Verformungsbereich (56) des elastisch verformbaren Bauteils (54) angeordneten Verformungs- oder Kraftsensor (68), welcher ein Verformungssignal liefert, in dessen Abhängigkeit das Stellsignal erzeugt wird, und das elastisch verformbare Bauteil wenigstens zwei funktional in Reihe geschaltete Federelemente (46, 54) beinhaltet, wobei eines der Federelemente (54) bei einer gegebenen Belastung einen in Belastungsrichtung kleineren Verformungsweg aufweist als das andere Federelement (46) und wobei dem einen Federelement (54) der Verformungs- oder Kraftsensor (68) zugeordnet ist.

3. Vorrichtung nach Anspruch 2, **dadurch gekennzeichnet, dass** das andere Federelement durch wenigstens eine Schraubenfeder (46) gebildet wird.

4. Vorrichtung nach einem der Ansprüche 1 bis 3, **dadurch gekennzeichnet, dass** das Federelement durch wenigstens eine Tellerfeder (54) gebildet wird.

5. Vorrichtung nach Anspruch 4, **dadurch gekennzeichnet, dass** die Tellerfeder (54) derart ausgebildet ist, dass der vorspringende Abschnitt (56) nach dem Umschnappen selbsttätig in die Ausgangslage zurückschnappt.

6. Vorrichtung nach Anspruch 4 oder 5, **dadurch gekennzeichnet, dass** ein von dem Pedal (6) betätigbarer Stößel (32, 36) gegen die Tellerfeder (54) in Umschnapprichtung anschlagbar ausgebildet ist.

7. Vorrichtung nach Anspruch 6, **dadurch gekennzeichnet, dass** ein Ende (42) des Stößels (32) erst nach Zurücklegen eines vorgegebenen Betätigungsweges (B) an der Tellerfeder (54) anschlägt.

8. Vorrichtung nach Anspruch 6 oder 7, **dadurch gekennzeichnet, dass** ein randseitiger Auflageabschnitt (60) der Tellerfeder (54) gegen einen Boden (62) eines Gehäuses (10) und der vorspringende Abschnitt (56) gegen eine endseitige Öffnung (44) einer Durchgangsbohrung (38) eines Führungselements (40) abgestützt ist, in welcher der Stößel (32) linear verschiebbar geführt ist.

9. Vorrichtung nach Anspruch 8, **dadurch gekennzeichnet, dass** das Führungselement (40) im Bereich der Öffnung (44) mit einer entsprechend dem vorspringenden Abschnitt (56) der Tellerfeder (54) geformten Anlagefläche (52) versehen ist.

10. Vorrichtung nach Anspruch 8 oder 9, **dadurch gekennzeichnet, dass** ein Ende der Schraubenfeder (46) gegen das Führungselement (40) und das andere Ende der Schraubenfeder (46) gegen den Stößel (32) abgestützt sind.

11. Vorrichtung nach einem der Ansprüche 1 bis 10, **dadurch gekennzeichnet, dass** ein vom Pedal (6) betätigbares Betätigungselement (14) mit einem kegelförmig sich zum Ende hin verjüngenden Abschnitt (20) in eine komplementär kegelig geformte Ringöffnung (22) eines radial elastisch aufweitbaren Gleitrings (24) eingreift, welcher in dem Gehäuse (10) verschieblich geführt und wenigstens durch das eine Federelement (46, 54) axial belastet ist.

12. Vorrichtung nach einem der Ansprüche 1 bis 11, **dadurch gekennzeichnet, dass** der das Umschnappsignal liefernde Sensor eine Leiterplatte (64) beinhaltet, welche auf der vom Stößel (32) abgewandten Seite der Tellerfeder (54) derart beabstandet angeordnet ist, dass mittels eines durch den Stößel (32) hervorgerufenen Umschnappens die Tellerfeder (54) die Leiterplatte (64) kontaktiert.

13. Vorrichtung nach Anspruch 12, **dadurch gekennzeichnet, dass** die Leiterplatte (64) an dem Boden (62) des Gehäuses (10) angeordnet ist.

14. Vorrichtung nach wenigstens einem der Ansprüche 2 bis 13, **dadurch gekennzeichnet, dass** der Verformungs- oder Kraftsensor durch wenigstens einen an der Tellerfeder (54) angebrachten Dehnmessstreifen (68) gebildet wird.

15. Vorrichtung nach einem der Ansprüche 11 bis 14, **dadurch gekennzeichnet, dass** zumindest die Schraubenfeder (46), die Tellerfeder (54), der Stößel (32), der Gleitring (24), das Führungselement (40) und der endseitige kegelförmige Abschnitt (20) des Betätigungselementes (14) innerhalb des Gehäuses (10) koaxial angeordnet sind.

16. Vorrichtung nach wenigstens einem der vorhergehenden Ansprüche, **dadurch gekennzeichnet, dass** das Pedal ein Gaspedal (6), ein Bremspedal oder ein Kupplungspedal ist.

## Claims

1. Pedal apparatus (1) for motor vehicles having a pedal (6) which can be actuated by a driver, having a device for the sudden change in the actuating force from a predefined actuating path of the pedal (6), in particular a kickdown device, comprising at least one spring element (54) which has a section (56) which projects in one direction and can be snapped over into an opposite direction in relation to the direction of the projection on account of a deformation which is caused by an actuation of the pedal (6) above a defined degree of deformation, **characterized in that** the snapping over of the projecting section (56) of the spring element (54) can be detected by a sensor (64) which supplies a snap-over signal.

2. Pedal apparatus (1) for motor vehicles according to Claim 1, **characterized in that** the pedal (6) is loaded by a restoring force which is produced by a component which acts counter to the actuating force and by at least one elastically deformable component (46, 54), and having a position transmitter which generates an electric actuating signal as a function of the pedal position, comprising at least one deformation or force sensor (68) which is arranged in the deformation region (56) of the elastically deformable component (54) and supplies a deformation signal, as a function of which the actuating signal is generated, and the elastically deformable component comprises at least two spring elements (46, 54) which are connected functionally in series, one of the spring elements (54) having a smaller deformation path in the loading direction in the case of a given loading than the other spring element (46), and one spring element (54) being assigned the deformation or force sensor (68).

3. Apparatus according to Claim 2, **characterized in that** the other spring element is formed by at least one helical spring (46).

4. Apparatus according to one of Claims 1 to 3, **characterized in that** the spring element is formed by at least one disc spring (54).

5. Apparatus according to Claim 4, **characterized in that** the disc spring (54) is configured in such a way that the projecting section (56) snaps back automatically into the initial position after snapping over.

6. Apparatus according to Claim 4 or 5, **characterized in that** a tappet (32, 36) which can be actuated by the pedal (6) is configured such that it can bear against the disc spring (54) in the snap-over direction.

7. Apparatus according to Claim 6, **characterized in that** one end (42) of the tappet (32) does not bear against the disc spring (54) until a predefined actuating path (B) has been covered.

8. Apparatus according to Claim 6 or 7, **characterized in that** an edge-side supporting section (60) of the disc spring (54) is supported against a base (62) of a housing (10) and the projecting section (56) is supported against an end-side opening (44) of a through hole (38) of a guide element (40), in which through hole (38) the tappet (32) is guided such that it can be displaced linearly.

9. Apparatus according to Claim 8, **characterized in that** the guide element (40) is provided in the region of the opening (44) with a bearing face (52) which is shaped according to the projecting section (56) of the disc spring (54).

10. Apparatus according to Claim 8 or 9, **characterized in that** one end of the helical spring (46) is supported against the guide element (40) and the other end of the helical spring (46) is supported against the tappet (32).

11. Apparatus according to one of Claims 1 to 10, **characterized in that** an actuating element (14) which can be actuated by the pedal (6) engages by way of a section (20) which tapers conically towards the end into a complementarily conically shaped annular opening (22) of a sliding ring (24) which can be radially widened elastically, is guided displaceably in the housing (10) and is loaded axially at least by the one spring element (46, 54).

12. Apparatus according to one of Claims 1 to 11, **characterized in that** the sensor which supplies the snap-over signal comprises a printed circuit board (64) which is arranged spaced apart on that side of the disc spring (54) which faces away from the tappet (32), in such a way that the disc spring (54) makes contact with the printed circuit board (64) by means of a snapping-over action which is caused by the tappet (32).

13. Apparatus according to Claim 12, **characterized in that** the printed circuit board (64) is arranged on the base (62) of the housing (10).

14. Apparatus according to at least one of Claims 2 to 13, **characterized in that** the deformation or force sensor is formed by at least one strain gauge (68) which is attached to the disc spring (54).

15. Apparatus according to one of Claims 11 to 14, **characterized in that** at least the helical spring (46), the disc spring (54), the tappet (32), the sliding ring (24), the guide element (40) and the end-side conical section (20) of the actuating element (14) are arranged coaxially within the housing (10).

16. Apparatus according to at least one of the preceding claims, **characterized in that** the pedal is an accelerator pedal (6), a brake pedal or a clutch pedal.

## Revendications

1. Dispositif de pédale (10) de véhicule automobile comportant une pédale (6) actionnée par le conducteur, une installation pour modifier avec une variation brusque la force d'actionnement à partir d'une course d'actionnement prédéfinie de la pédale (6) notamment installation d'actionnement rapide (Kick-Down), comportant au moins un élément de ressort (54) présentant un segment (56) venant en saillie dans une direction et qui, par suite d'une déformation produite par l'actionnement de la pédale (6), et à partir d'un certain degré de déformation, commute à déclic de façon à venir en saillie dans la direction opposée par rapport à la direction précédente,
**caractérisé en ce que**
la commutation à déclic du segment (56) venant en saillie de l'élément de ressort (54) est détectée par un capteur (64) fournissant le signal de commutation.

2. Dispositif de pédale (1) de véhicule automobile selon la revendication 1,
**caractérisé en ce que**
la pédale (6) est sollicitée par une force de rappel agissant contre la force d'actionnement, cette force étant générée par au moins un composant déformable élastiquement (46, 54) et avec un capteur de position générant un signal de position, électrique, dépendant de la position de la pédale, et contenant au moins un capteur de déformation ou de force (68) dans la plage de déformation (56) du composant (54) déformable élastiquement, et qui fournit un signal de déformation en fonction duquel on génère le signal d'actionnement et le composant déformable élastiquement comporte au moins deux éléments de ressort (46,54) fonctionnellement en série, l'un des éléments de ressort (54) ayant une courte déformation plus petite dans le sens de la sollicitation pour une sollicitation donnée que l'autre élément de ressort (46) et un capteur de déformation ou de force (68) est associé à l'un des éléments de ressort (54).

3. Dispositif de pédale (1) de véhicule automobile selon la revendication 2,
**caractérisé en ce que**
l'autre élément de ressort est formé par au moins un ressort hélicoïdal (46).

4. Dispositif de pédale (1) de véhicule automobile selon l'une des revendications 1 à 3,
**caractérisé en ce que**
l'élément de ressort est formé par au moins un ressort Belleville (54).

5. Dispositif de pédale (1) de véhicule automobile selon la revendication 4,
**caractérisé en ce que**
le ressort Belleville (54) est réalisé pour que le segment (56) venant en saillie rebascule automatiquement dans la position de sortie après la commutation à déclic.

6. Dispositif de pédale (1) de véhicule automobile selon la revendication 4,
**caractérisé en ce qu'**
un poussoir (32, 36) actionné par la pédale (6) vient contre le ressort Belleville (54) dans la direction de commutation à déclic.

7. Dispositif de pédale (1) de véhicule automobile selon la revendication 6,
**caractérisé en ce qu'**
une extrémité (42) du poussoir (32) bute contre le ressort Belleville (54) seulement après avoir parcouru une course d'actionnement (B) prédéfinie.

8. Dispositif de pédale (1) de véhicule automobile selon la revendication 6 ou 7,
**caractérisé en ce qu'**
un segment d'appui (60) du côté du bord du ressort Belleville (54) est en appui contre le fond (62) d'un boîtier (10) et le segment (56) venant en saillie est appuyé contre une ouverture côté extrémité (44) d'un perçage traversant (38) d'un élément de guidage (40) dans lequel le poussoir (32) est guidé en coulissement linéaire.

9. Dispositif de pédale (1) de véhicule automobile selon la revendication 8,
**caractérisé en ce que**
dans la région de l'ouverture (44), l'élément de guidage (40) est muni d'une surface d'appui (52) de forme correspondant au segment en saillie (56) du ressort Belleville (54).

10. Dispositif de pédale (1) de véhicule automobile selon la revendication 8 ou 9,
**caractérisé en ce qu'**
une extrémité du ressort hélicoïdal (46) est appuyée contre l'élément de guidage (40) et l'autre extrémité du ressort hélicoïdal (46) est appuyée contre le poussoir (32).

11. Dispositif de pédale (1) de véhicule automobile selon l'une des revendications 1 à 10,
**caractérisé en ce qu'**
un élément d'actionnement (14) commandé par la pédale (6) pénètre avec un segment (20) de forme conique allant en diminuant vers son extrémité dans une ouverture annulaire (22) de forme conique complémentaire d'une bague de glissement (24) qui s'élargit élastiquement dans la direction radiale et qui est guidée en coulissement dans le boîtier (10) en étant sollicitée axialement par un élément de ressort (46, 54).

12. Dispositif de pédale (1) de véhicule automobile selon l'une des revendications 1 à 11,
**caractérisé en ce que**
le capteur fournissant le signal de commutation à déclic comporte une plaque de circuit (64) écartée sur le côté du ressort Belleville (54) à l'opposé du poussoir (32) pour qu'à l'aide de la commutation à déclic produite par le poussoir (32), le ressort Belleville (54) touche la plaque de circuit (64).

13. Dispositif de pédale (1) de véhicule automobile selon la revendication 12,
**caractérisé en ce que**
la plaque de circuit (64) est prévue au fond (62) du boîtier (10).

14. Dispositif de pédale (1) de véhicule automobile selon au moins l'une des revendications 2 à 13,
**caractérisé en ce que**
le capteur de déformation de force est formé par au moins une jauge de contraintes (68) appliquée sur le ressort Belleville (54).

15. Dispositif de pédale (1) de véhicule automobile selon l'une des revendications 11 à 14,
**caractérisé en ce qu'**
au moins le ressort hélicoïdal (46), le ressort Belleville (54), le poussoir (32), la bague de glissement (24), l'élément de guidage (40) et le segment d'extrémité de forme conique (20) de l'élément d'actionnement (14) sont disposés co-axialement dans le boîtier (10).

16. Dispositif de pédale (1) de véhicule automobile selon au moins l'une des revendications précédentes,
**caractérisé en ce que**
la pédale est une pédale d'accélérateur (6), une pédale de frein ou une pédale d'embrayage.
